# EUROPEAN PATENT APPLICATION

(11) **EP 2 305 364 A1**
(43) Date of publication of application: **06.04.2011**
(21) Application number: 09171636.5
(22) Date of filing: 29.09.2009
(51) Int. Cl.: B01D 53/14, F01K 7/44

(54) **Power plant for CO2 capture**

(71) Applicant: Alstom Technology Ltd, 5400 Baden (CH)
(72) Inventor: Li, Hongtao, 5300 Turgi (CH); Droux, François, 5452 Oberrohrdorf (CH); Kjellberg, Tobias, 5200 Brugg (CH); Hoffmann, Jürgen, 5417 Untersiggenthal (CH)

(57) **Abstract**

Since CO2 is identified as a main greenhouse gas, its capture and storage is essential to control global warming. Increased competitiveness of power plants designed for CO2 capture and compression, retrofit ready power plants including efficient ways to retrofit power plants to CO2 capture plants will allow earlier utilization of CO2 capture systems (12).

The objective of the present invention is to provide a fossil fired power plant (1, 2) with increased operational flexibility, which allows operation with high efficiency when a steam is extracted for the operation of a CO2 capture system (12) as well as when the CO2 capture system (12) is not operating and no steam is extracted. Further, a method to operate this kind of plant (1, 2) is an objective of the invention. An additional objective is to provide a power plant, (1, 2) which is prepared for future retrofit of a CO2 capture system (12) and is already provided with a steam cycle capable of operation with high efficiency with or without steam extraction.

One main aspect of the invention is to provide a water steam cycle with two steam turbine arrangements (14, 15), one for continuous operation independent of CO2 capture operation, and one which can at least partially be shut down during CO2 capture operation.

## Description

### FIELD OF THE INVENTION

The invention relates to power plants with integrated CO2 capture as well as CO2 capture ready power plants.

### BACKGROUND OF THE INVENTION

In recent years it has become obvious that generation of greenhouse gases lead to global warming and that further increase in greenhouse gas production will further accelerate global warming. Since CO2 (carbon dioxide) is identified as a main greenhouse gas, CCS (carbon capture and storage) is considered one potential major means to reduce the release of greenhouse gases into the atmosphere and to control global warming. In this context CCS is defined as the process of CO2 capture, compression, transport and storage. Capture is defined as a process in which CO2 is removed either from the flue gases after combustion of a carbon based fuel or the removal of and processing of carbon before combustion. Regeneration of any absorbents, adsorbents or other means to remove CO2 of carbon from a flue gas or fuel gas flow is considered to be part of the capture process.

The CO2 capture technology currently considered closest to large-scale industrial application is post combustion capture. In post-combustion capture the CO2 is removed from a flue gas. The remaining flue gas is released to the atmosphere and the CO2 is compressed for transportation and storage. There are several technologies known to remove CO2 from a flue gas such as absorption, adsorption, membrane separation, and cryogenic separation.

All known technologies for CO2 capture and compression require relatively large amounts of energy. There are many publications on the optimization of the different processes and the reduction of the power and efficiency penalty by integrating these processes into a power plant

The EP1688173 gives an example for post combustion capture and a method for the reduction of power output penalties due to CO2 absorption, respectively the regeneration of the absorption liquid. Here it is proposed to extract steam for regeneration of the absorbent from different stages of the steam turbine of a power plant to minimize the reduction in the turbine output.

In the same context, the W02007/073201 suggests to use the compression heat, which results from compressing the CO2 flow for regeneration of the absorbent.

These methods aim to reduce the power requirements of specific CO2 capture equipments, however they reduce operational flexibility of the plant

### SUMMARY OF THE INVENTION

The main objective of the present invention is to provide a fossil fired power plant with a CO2 capture system with increased operational flexibility, which allows operation with high efficiency when a steam extraction for a CO2 capture system is in operation as well as when the CO2 capture system is not operating and no steam is extracted. Further, a method to operate this kind of plant is an objective of the invention. An additional objective is to provide a power plant, which is prepared for future retrofit of a CO2 capture system, and which is already provided with a steam cycle capable of operation with high efficiency with or without steam extraction.

One main aspect of the invention is to provide a water steam cycle with two steam turbine arrangements. One steam turbine arrangement is operating independently of a CO2 capture operation, and one steam turbine arrangement can at least partially be shut down during a CO2 capture operation.

To this end, a power plant, which comprises a water steam cycle with two steam turbine arrangements, is proposed. The first steam turbine arrangement comprises steam turbines with at least two pressure levels, and the second steam turbine arrangement comprises at least one back pressure turbine designed to expand steam to a back pressure, which is suitable as supply pressure for a CO2 capture system or an intermediate pressure turbine designed to expand steam to a pressure, which is suitable as supply pressure for a CO2 capture system.

To optimize the steam cycle it is advantageous to extract heat in a boiler at different pressure levels. In one embodiment of the invention the inlet pressure of the second turbine arrangement's back pressure steam turbine is therefore higher or lower than the inlet pressure of the first turbine arrangements intermediate pressure steam turbine. For example the inlet pressure of the second turbine arrangement's back pressure steam turbine is higher than the inlet pressure of the first turbine arrangement's intermediate pressure steam turbine. In consequence the total water steam cycle will therefore effectively have an additional pressure level dedicated to the second steam turbine in order to maximize the plant's performance and or profitability.

In order to efficiently use the second turbine arrangement's back pressure steam turbine's outlet steam at all times, a low-pressure steam turbine designed for the back pressure turbine's outlet pressure and outlet mass flow is part of the second turbine arrangement. It converts the back pressure turbine's outlet steam flow into mechanical energy if the steam is not directed to a CO2 capture system.

Further, the second steam turbine arrangement typically has a smaller design mass flow than the first steam turbine arrangement. In consequence it can be advantageous if the second steam turbine arrangement or the back pressure turbine of the second steam turbine arrangement is operating at a higher frequency than the first steam turbine arrangement. To supply power to an electric grid it is either connected to a generator, which is operating at grid frequency, with a gearbox or is driving a generator, which is running at an elevated frequency. In the latter case the second generator is connected to the grid with the help of a frequency converter, for example a matrix converter.

In another embodiment the power plant is a combined cycle power plant comprising a CO2 capture system for removing CO2 from the flue gas or prepared for retrofitting a CO2 capture system. It comprises flue gas ducting and a stack as well as two steam turbine arrangements. The first one comprising at least one back pressure turbine designed to expand steam to a back pressure, which is suitable as supply pressure for the installed or planed CO2 capture system. The second steam turbine arrangement comprises a low-pressure turbine with an inlet pressure, which is matched to the outlet pressure of the back pressure turbine, and designed for the steam mass flow of the CO2 capture system to convert the thermal energy of the outlet steam of the back pressure steam turbine into mechanical energy when the CO2 capture system is not operating.

This kind of steam turbine arrangement is for example suitable for CO2 capture systems, which are based on Ammines. They typically need relatively large amounts of steam at a low-pressure level. For these the back pressure steam turbine expands to a low back pressure. The low-grade steam has only a relatively low specific enthalpy so that the total mass flow of the back pressure turbine is required for CO2 capture. This allows omission of a low-pressure steam turbine. This arrangement is particularly suitable for combined cycle power plants, where the specific steam mass flow relative to the flue gas mass flow is low. Another embodiment, in which the low-pressure turbine can be omitted, is a CO2 capture system based on Ammonia as absorbent. In this case additional process steam is typically available for extraction.

In a further embodiment the power plant is a combined cycle power plant, which comprises a gas turbine with flue gas recirculation. Part of the flue gas is recirculated into the inlet air or the gas turbine after its useful heat is extracted in a heat recovery steam generator. This increases the CO2 concentration in the flue gas and facilitates CO2 capture from the flue gas.

According to a further embodiment the second turbine arrangement's low-pressure turbine is engageable to the second turbine arrangement's shafting with an overrunning clutch. If steam is provided to the low-pressure turbine, and the low-pressure turbine is operating, the overrunning clutch is engaged, and the low-pressure turbine drives the second generator. If no steam is available during CO2 capture operation the gear can disengage and the steam turbine can remain at standstill.

In one embodiment the first and second steam turbine arrangements are aligned on one common shafting with only one generator between the two steam turbine arrangements.

All embodiments either comprise a CO2 capture system for removing CO2 from the flue gas, flue gas ducting to the CO2 capture system, and a stack downstream of the CO2 capture system or comprise the space required to retrofit such a capture system. CO2 capture system can comprise auxiliaries, such as CO2 treatment, and compression facilities. If the plant is built for later retrofit of a CO2 capture system, the plant and reserved space has to be arranged to allow later connection of the CO2 capture system. Additionally, space for flue gas cooling before CO2 capture, and for construction shall be also reserved for later retrofit if required.

In one embodiment of a plant for future retrofit, the stack is arranged at its final location considering the future CO2 capture system. The flue gas ducting is designed for continuous operation before retrofitting, and can be used as bypass duct once the CO2 capture system is retrofitted. To minimize the impact of retrofitting the CO2 capture system, the flue gas ducting may already consist a flap, damper or diverter to direct the flue gas to the CO2 capture system, once it is retrofitted. Further, it may comprise a branch connection to return CO2 depleted flue gas from the future CO2 capture system to the flue gas ducting. Once the CO2 capture system is in full operation the part of the original flue gas duct of the power plant, which is downstream of the damper or diverter, becomes a bypass duct.

To take the additional pressure losses of the CO2 capture system into account, space for a flue gas blower shall be provided if applicable. This allows the optimization of the power plant for the initial back pressure of the ducting, which is directly leading the flue gas to the stack. In one embodiment the flue gas blower is installed downstream of the diverter or damper and is only needed for CO2 capture operation.

Besides the flue gas ducting's mechanical interfaces, low-pressure steam piping to the CO2 capture system including condensate return lines, control interfaces between the power plant, and the CO2capture system are required.

One major advantage of the proposed plant arrangement is the possibility to retrofit or upgrade an existing conventional power plant without CO2 capture to a power plant with CO2 capture without any significant modifications to the existing power plant.

One element of the current invention is a method of retrofitting an existing conventional power plant without CO2 capture to a power plant with CO2 capture. According to this method a CO2 capture system is built next to the existing power plant.

According to an embodiment of this method the CO2 capture system, the additional flue gas ducting, and the necessary steam, power and controls connections are built while the conventional power plant is in normal operation. Operation of the existing conventional power plant is only interrupted for connecting the existing conventional power plant to CO2 capture system. For this only the additional or changed flue gas ducting is connected. Further, the low-pressure steam, condensate, electric power supply, and controls are connected to the CO2 capture system. Further subsequent recommissioning has to be carried out. No or very limited changes or retrofits have to be carried out on the major components of original power plant itself, e.g. on the steam or gas turbine or the boiler because the proposed steam cycle has the provisions for retrofit of the CO2 capture system.

The CO2 capture system can be cold commissioned independently of the operation of the existing power plant. For change over to CO2 capture from the conventional power plant the direction into which the flap, damper or diverter releases flue gas simply has to be changed. Depending on the arrangement the return branch from the CO2 capture system has to be connected to an existing stack.

Interruption of the commercial operation of the existing power plant can thus be minimized. The time needed for reconnecting or changing the flue gas ducts can be reduced below the time needed for a normal scheduled maintenance outage of the existing power plant.

A further subject of this invention is a method to operate a power plant for the combustion of carbon-based fuels with a CO2 capture system as described above. According to this operation method, the first steam turbine arrangement is operated to produce power during steady state operation of the steam cycle. The second steam turbine arrangement is either at least partially bypassed to provide steam for the CO2 capture system or is operated to produce power and to release low-pressure steam to the CO2 capture system (12) during periods when the CO2 capture system (12) is in operation. When the CO2 capture system is not in operation both steam turbine arrangements are operated using all available steam to produce power during steady state operation. All available steam is the steam produced by the boiler or HRSG reduced by steam flows required for operation of the power plant itself, e.g. for fuel preheating, or reduced by steam diverted as process steam, e.g. in cogeneration.

In a further embodiment the CO2 capture unit is switched off and a low-pressure turbine of the second steam turbine arrangement is brought into operation to produce peak power during periods of high electricity demand or during which CO2 capture is not required or cannot be operated.

To allow a quick start up and/ or loading of a low-pressure turbine of the second steam turbine arrangement if additional power is required during periods of high electricity demand, the low-pressure turbine of the second steam turbine arrangement is charged with a minimum steam flow to keep it warm.

This split of the water steam cycle into two parts allows high efficiency operation when steam is used for a CO2 capture system as well as when no steam is used for a CO2 capture system. It allows a flexible operation with CO2 capture and different operating methods depending on the optimization target. Possible optimization targets are for example maximum power, maximum efficiency, and maximum CO2 capture rate.

The steam power plants as described here are typically coal fired steam power plants. However, the invention is also applicable to any other kind of fossil fired steam power plants such as oil or gas fired steam power plants.

### BRIEF DESCRIPTION OF THE DRAWINGS

The invention, its nature as well as its advantages, shall be described in more detail below with the aid of the accompanying drawings. Referring to the drawings:
Fig. 1 schematically shows a fossil-fired steam power plant with a CO2 capture system, and a water steam cycle with two steam turbine arrangements,
Fig. 2 schematically shows a fossil-fired steam power plant with a CO2 capture system, and a water steam cycle with two steam turbine arrangements using four pressure levels,
Fig. 3 schematically shows a combined cycle plant with flue gas recirculation, a CO2 capture system, and a water steam cycle with two steam turbine arrangements,
Fig. 4 schematically shows a combined cycle plant with flue gas recirculation, a CO2 capture system, and a water steam cycle with two steam turbine arrangements aligned along one shafting, and engageable with an overrunning clutch,
Fig. 5 schematically shows a combined cycle plant with flue gas recirculation, a CO2 capture system, and a water steam cycle with two steam turbine arrangements aligned along one shafting, wherein the second steam turbine arrangement comprises two low-pressure turbines engageable with an overrunning clutch.

### DETAILED DESCRIPTION OF THE DRAWINGS AND THE INVENTION

The main components of the power plant with CO2 capture according to this invention are a power plant 1, 2 comprising a first steam turbine arrangement 14 and a second steam turbine arrangement 15, and a CO2 capture system 12.

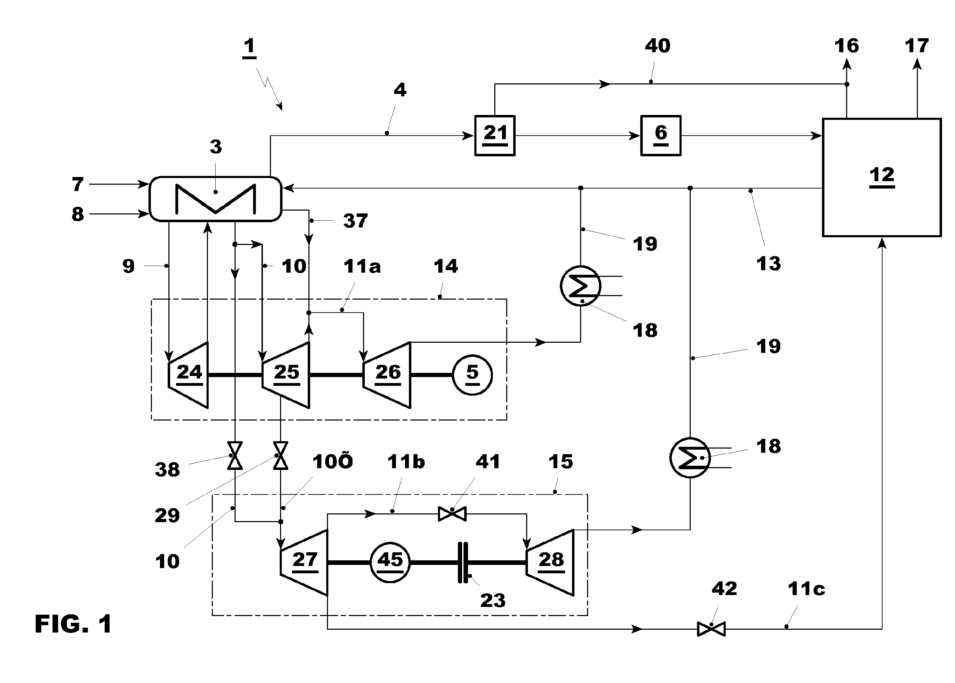

A first example of a plant arrangement according to one embodiment of the invention is shown in Fig. 1. In this example the power plant 1 is a steam power plant 1. It comprises a boiler 3 to which fossil fuel 8 and air 7 are supplied, a first steam turbine arrangement 14, a second steam turbine arrangement 15, and a CO2 capture system 12. The fuel 7 and air 8 are combusted in the boiler 3 generating live steam 9, 10, 37 and flue gas 4.

The first steam turbine arrangement 14 comprises a HPT (high pressure steam turbine) 24, an IPT (intermediate pressure steam turbine) 25 and a LPT (low-pressure steam turbine) 26. The HPT 24 and IPT 25 are driven by high-pressure life steam 9, and intermediate pressure life steam 10 from the boiler 3. The LPT 26 is driven by low-pressure steam 11 a, which is obtained from the IPT 25, and/or low-pressure life steam 37 from the boiler 3. The arrangement further comprises a generator 5, which produces electric power, and a condenser 18, from which feed water 19 is returned to the boiler 3. The steam cycle is simplified and shown schematically without feed water pumps, and details of the boilers etc., as these elements are not subject of the invention.

The second steam turbine arrangement 15 comprises a back pressure steam turbine 27, and a second LPT (low-pressure steam turbine) 28. The back pressure steam turbine 27 is driven by intermediate pressure life steam 10 from the boiler 3. Alternatively the back pressure steam turbine 27 can be driven by extracted intermediate pressure steam 10' from the first IPT 25. The steam extraction can be controlled by the steam extraction valve 29. The intermediate pressure steam 10 can be controlled by the steam control valve 38. The second LPT 28 is driven by low-pressure steam 11 b, which is obtained from the exhaust steam of the back pressure steam turbine 27 if the CO2 capture system 12 is not in operation. The steam flow to the second LPT 28 is controlled by the second LP control valve 41. The arrangement further comprises a generator 45, which produces electric power, and a condenser 18 from which feed water 19 is returned to the boiler 3. The steam cycle is simplified and shown schematically without feed water pumps, and details of the boilers etc., as these elements are not subject of the invention.

The CO2 capture system 12 is schematically shown as a box, which removes CO2 from the flue gas 4. The CO2 depleted flue gas 16 is released from the CO2 capture unit 12 to a stack 16. In case the CO2 capture unit 12 is not operating, it can be bypassed via the flue gas bypasses 40. To control the bypass flow a bypass flap 21 is provided in the flue gas ducting.

A CO2 capture system 12 comprises for example of a CO2 absorption unit, in which CO2 is removed from the flue gas 4 by an absorbent, and a regeneration unit, in which the CO2 is released from the absorbent. Depending on the temperature of the flue gas and the operating temperature range of the CO2 absorption unit a flue gas cooler 6 might also be required. The captured CO2 is sent for compression and storage 17. Typically a large amount of thermal energy is required by the CO2 capture system 12 for its regeneration unit. This is supplied to the CO2 capture system as low-pressure steam 11c from the back pressure steam turbine 27. The low-pressure steam 11 c flow to the CO2 capture system 12 is controlled by the capture system control valve 42. Condensate or low-grade steam is returned from the CO2 capture system 12 to the water steam cycle in the condensate return 13.

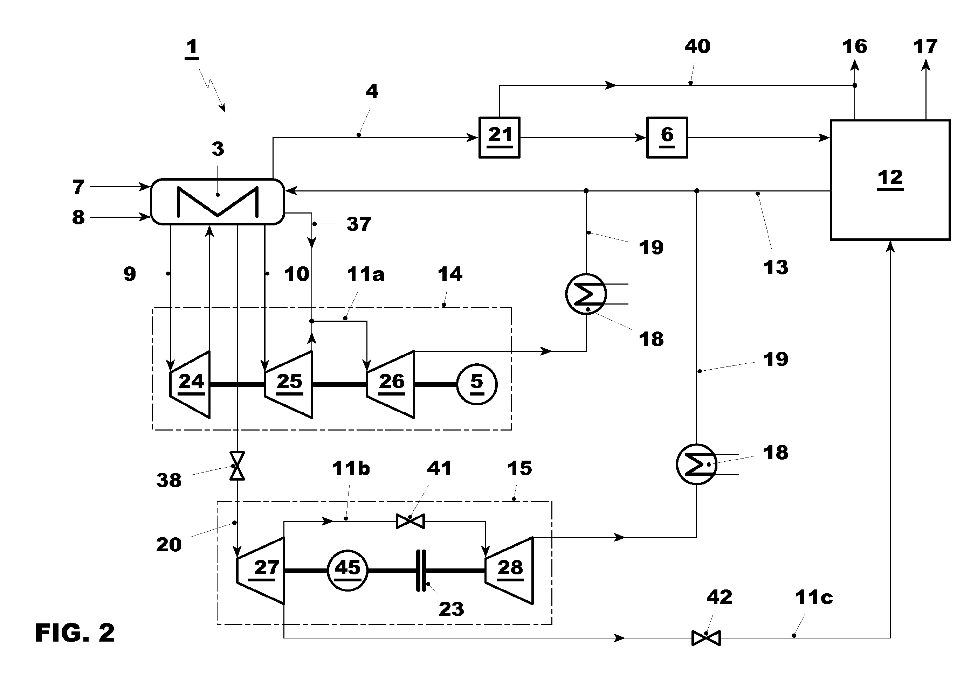

Fig. 2 schematically shows a fossil-fired steam power plant 1 comprising a CO2 capture system 12, and a water steam cycle with two steam turbine arrangements 14, 15 using four pressure levels. The first steam turbine arrangement 14, and the CO2 capture system 12, are analogue to those shown in Fig. 1.

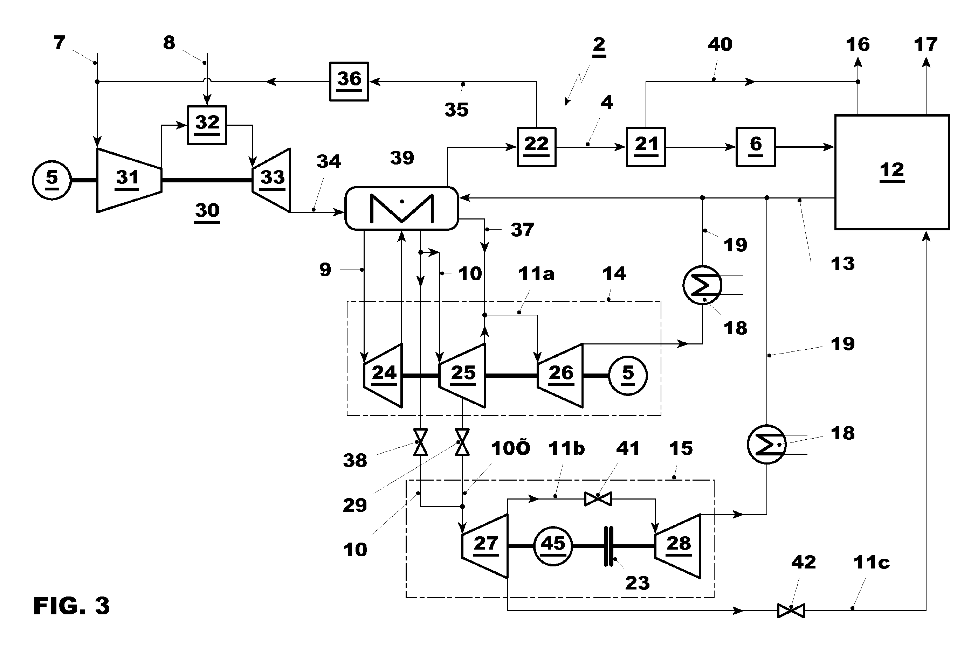

In this example the back pressure steam turbine 27 is not feed by intermediate steam 10 with the same pressure level as the IPT 25 of the first steam turbine arrangement 14 but with elevated intermediate pressure steam 20 at an elevated pressure level compared to the intermediate pressure of the first steam turbine arrangement 14. The flow of elevated intermediate pressure steam 43 to the back pressure steam turbine 27 can be controlled by the steam control valve 38. By using two different pressure levels for the intermediate pressure steam turbines the water steam cycle effectively becomes a four pressure level cycle. This allows better utilization of the extracted heat and leads to a higher overall efficiency. Fig. 3 schematically shows a combined cycle plant 2 comprising a gas turbine30 with flue gas recirculation 35, a CO2 capture system 12, and a water steam cycle with two steam turbine arrangements 14, 15. The first and second steam turbine arrangement 14, 15 are analogue to those shown in Fig. 1.

The gas turbine 30 comprises a compressor 31, in which inlet air 7 is compressed, a combustor 32, and a turbine 33 and drives a generator 5. The compressed gas is used for combustion of the fuel 8 in the combustor 32, and the pressurized hot gas expands in the turbine 33. Its main outputs are electric power from the generator 5, and hot flue gas 34. The hot flue gas 34 passes through the heat recovery steam generator 39 (HRSG), which generates live steam 9, 10, 37. The flue gas leaves the HRSG 39 at a lower temperature level and is directed to the CO2 capture system 12.

In this example gas turbine is shown as a gas turbine with flue gas recirculation. A controllable fraction of the flue gas is diverted by a damper, or a control flap and/or a blower (not shown) for flue gas recirculation 22, and recirculated to the inlet air 7 via the flue gas recirculation line 35. The recirculated flue gas is cooled in the flue gas cooler 36 to limit or control the inlet temperature of the gas turbine compressor 31. The flue gas cooler 36 typically comprises a condensate separator (not shown), which removes condensate from the cooled flue gas.

Further, the combined cycle power plant 2 comprises a first and second steam turbine arrangement 14, 15 analogues to those shown in Fig. 1. However the steam is not supplied form a boiler 3 but from a HRSG 39.

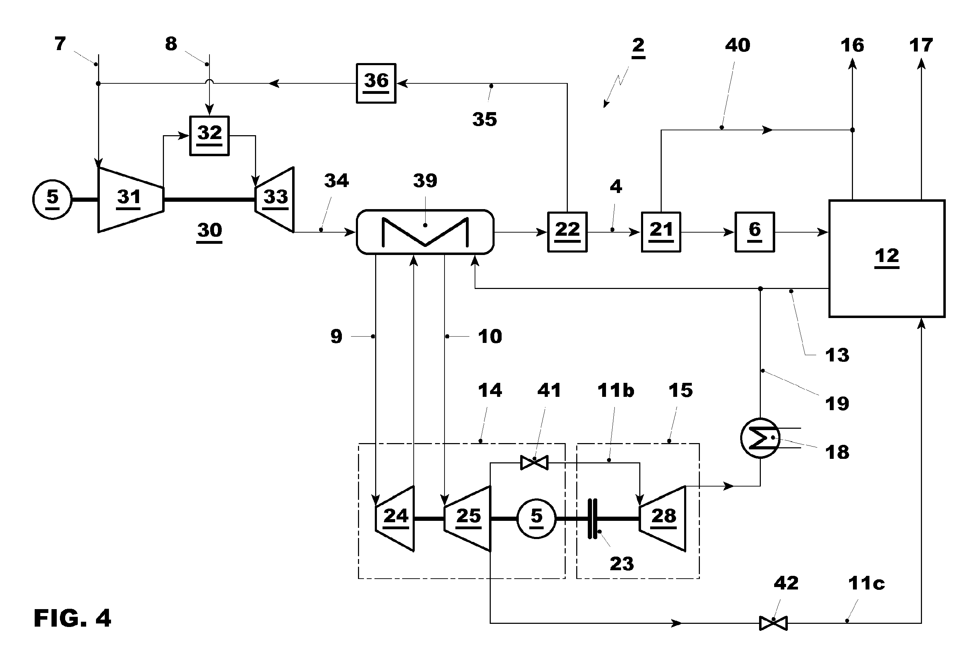

Fig. 4 schematically shows another example of a combined cycle plant 2 with flue gas recirculation 35, and a CO2 capture system 12. In this example the two steam turbine arrangements 14, 15 of the water steam cycle are aligned along one shafting. The first turbine arrangement 14 is simplified and only consists of a HPT 24, and an IPT 25, which is designed as a back pressure turbine to deliver exhaust steam with the properties required by the CO2 capture system 12. The exhaust steam of the IPT 25 is low-pressure steam and is either used to drive the second steam turbine arrangement when the CO2 capture system 12 is not operated or is used for the CO2 capture system 12.

The second steam turbine arrangement 15 is also simplified and only consists of a LPT 28. It is arranged along the same shaft as the first steam turbine arrangement 14. If the LPT 28 is operating it is engaged to the generator 5 of first steam turbine arrangement 14 by an overrunning clutch 23. If the low-pressure steam 11c is used for the operation of the CO2 capture system 12 the second steam turbine arrangement 15 is off-line and the overrunning clutch 23 is disengaged.

The low-pressure steam 11 b flow to the second LPT 28 is controlled by the second LP control valve 41. The low-pressure steam 11 c flow to the CO2 capture system 12 is controlled by the capture system control valve 42.

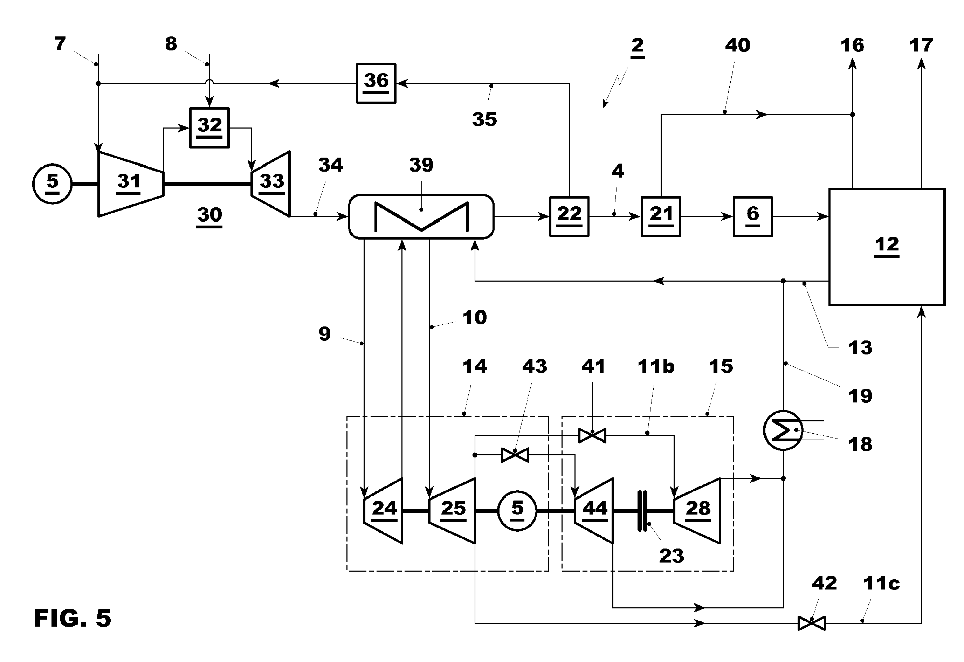

A further embodiment of the invention is shown in Fig. 5. It schematically shows a combined cycle plant 2 with flue gas recirculation, a CO2 capture system 12, and a water steam cycle with two steam turbine arrangements 14, 15 aligned along one shafting. It is similar to the example given in Fig. 4, however the second steam turbine arrangement 15 comprises two low-pressure turbines 28, 44 engageable with an overrunning clutch 23. Depending on the steam requirements of the CO2 capture system 12 not all exhaust steam of the IPT 25 might be needed by the CO2 capture system 12. In order to utilize the excess low-pressure steam 11 a second low-pressure steam turbine 44 is added to the second steam turbine arrangement 15. The HPT 24 and IPT 25 of the first steam turbine arrangement are coupled to the generator 5 on one side of the generator. The additional LPT 44 is coupled to the generator 5 on the other side. Further, the LPT 28 of the second steam turbine arrangement is engageable to the additional LPT 44 by an overrunning clutch 23. The low-pressure steam 11 b flow to the second LPT 28 is controlled by the second LP control valve 41. The low-pressure steam flow to the additional low-pressure steam turbine 44 is controlled by the LP control valve 43. The LPT 28 has a design mass flow equal to a CO2 capture system's 12 steam requirements at design conditions. The additional LPT 44 has a design mass flow, which matches the difference between available low-pressure steam at design conditions and a CO2 capture system's 12 steam requirements at design conditions. Here design conditions are conditions when the plant is operating at base load, and at ambient conditions for which the plant is designed, e.g. ISO conditions (ISO 2314, ambient temperature of 15°C, ambient pressure of 1013 mbar, and relative humidity of 60%).

Exemplary embodiments described above and in the drawings disclose to a person skilled in the art embodiments, which differ from the exemplary embodiments and which are contained in the scope of the invention.

For example all Figures show power plants 1, 2 including CO2 capture systems. To provide a capture ready power plant 1, 2 according to the invention the same arrangement and two steam turbine arrangements 14, 15 can be used. Simply the CO2 capture system 12 including the flue gas cooler 6 is omitted and replaced by space for future retrofit. The flue gas ducting, which is needed to connect the CO2 capture system and the steam line, which provides the CO2 capture system 12 with low-pressure steam 11c, can be omitted or provided with blind flanges for later connection.

In the examples given above, single combustion gas turbines are described. It is to be understood that sequential combustion gas turbines, also called gas turbine with reheat combustor, as described for example in US5577378, can equally be used. A combination of sequential combustion gas turbine and singe combustion gas turbine based power plants can also be used. The application of sequential combustion gas turbines can be advantageous, as the CO2 concentration in their flue gas is typically higher that in single combustion gas turbines.

In the examples no single shaft power trains are shown for the combined cycle power plants. However, arrangements with single shaft power trains in which the first steam turbine arrangement 14 and or the second steam turbine arrangement 15 can be coupled by an overrunning clutch to the gas turbine's generator 5 are equally conceivable.

Further, the term boiler should not be used in a restrictive manner. For example supercritical steam generators are also to be considered as boilers in the context of the invention.

### List of reference symbols

- 1: Steam power plant with CO2 capture
- 2: Combined cycle power plant with CO2 capture
- 3: Boiler
- 4: Flue gas
- 5: Generator
- 6: Flue gas cooler
- 7: Air
- 8: Fuel
- 9: Live high pressure steam
- 10 , 10': Intermediate pressure steam
- 11 a,b,c: Low-pressure steam
- 12: CO2 capture system
- 13: Condensate return
- 14: First steam turbine arrangement
- 15: Second steam turbine arrangement
- 16: CO2 depleted flue gas
- 17: CO2 for compression and storage
- 18: Condenser
- 19: Feed water
- 20: Elevated intermediate pressure live steam
- 21: Bypass flap for the CO2 capture system
- 22: Control flap for flue gas recirculation
- 23: Overrunning clutch
- 24: HPT (High pressure steam turbine)
- 25: First IPT (intermediate pressure steam turbine)
- 26: First LPT (low-pressure steam turbine)
- 27: Second IPT (intermediate pressure steam turbine)
- 28: Second LPT (low-pressure steam turbine)
- 29: Steam extraction valve
- 30: Gas turbine
- 31: Compressor
- 32: Combustor
- 33: Turbine
- 34: Gas turbine flue gas
- 35: Flue gas recirculation line
- 36: Flue gas cooler
- 37: Live low-pressure steam
- 38: IP control valve (intermediate pressure steam control valve)
- 39: HRSG (Heat Recovery Steam Generator)
- 40: Flue gas bypass
- 41: LP control valve (low-pressure steam control valve)
- 42: CO2 capture system control valve
- 43: LP control valve
- 44: LP steam turbine
- 45: Generator

## Claims

1. A power plant comprising a steam power plant (1) or/and a combined cycle power plant (2), wherein the water steam cycle of the power plant (1, 2) comprises two steam turbine arrangements (14, 15), the first steam turbine arrangement (14) comprising steam turbines with at least two pressure levels and a second steam turbine arrangement (15) comprising at least one back pressure turbine (27) designed to expand steam to the supply pressure of a CO2 capture system (12).

2. A power plant (1, 2) according to claim 1, **characterized in that** the at least one back pressure steam turbine (27) of the second steam turbine arrangement (15) is designed for an inlet pressure that is below the inlet pressure of a high pressure steam turbine (24) of the first steam turbine arrangement (14), and different from the outlet pressure of the high pressure steam turbine (24) of the first steam turbine arrangement (14).

3. A power plant (1, 2) according to claim 1 or 2, **characterized in that** the second steam turbine arrangement (15) additionally comprises a low-pressure steam turbine (28), which is designed for a supply pressure that matches the outlet pressure of the back pressure turbine (27), and that the back pressure steam turbine (27) and the low-pressure steam turbine (28) are both designed for the steam mass flow of a CO2 capture system (12) in order to convert the thermal energy of the outlet steam of the back pressure steam turbine (27) into mechanical energy when the CO2 capture system (12) is not operating.

4. A power plant (1, 2) according to claim 2 or 3, **characterized in that** the second steam turbine arrangement (15) comprises two low-pressure steam turbines (28, 44), one with a design mass flow equal to a CO2 capture system's (12) steam requirements at design conditions, and one with a design mass flow, which matches the difference between available low-pressure steam at design conditions and a CO2 capture system's (12) steam requirements at design conditions.

5. A power plant (1, 2) according to one of the preceding claims, **characterized in that** the second steam turbine arrangement (15) has a smaller design mass flow than the first steam turbine arrangement (14), and **in that** the second steam turbine arrangement (15) is designed for a higher operating frequency than the first steam turbine arrangement (14).

6. A combined cycle power plant (2), flue gas ducting and a stack (16), wherein the water steam cycle of the combined cycle power plant (2) comprises two steam turbine arrangements (14, 15), the first steam turbine arrangements (14) comprising at least one intermediate pressure turbine (25) designed to expand steam to a back pressure, which is suitable as supply pressure for a CO2 capture system (12), and the second steam turbine arrangement (15) comprising a low-pressure turbine (28) with an inlet pressure, which is matched to the outlet pressure of the intermediate pressure turbine (25), and designed for the steam mass flow of the CO2 capture system (12) to convert the thermal energy of the outlet steam of the intermediate pressure steam turbine (25) into mechanical energy when the CO2 capture system (12) is not operating.

7. A power plant (2) according to claim 6, **characterized in that** at least one gas turbine (30) of the combined cycle power plant is designed for flue gas recirculation, and **in that** part of the flue gas leaving the heat recovery steam generator (39) is recirculated into the inlet air of the gas turbine (30).

8. A power plant (1, 2) according to one of the claims 1 to 7, **characterized in that** the low-pressure turbine (28) of the second steam turbine arrangement (15) is connectable to a generator (45, 5) by an overrunning clutch (23).

9. A power plant (1, 2) according to one of the claims 1 to 8, **characterized in that** the first and second steam turbine arrangements (14, 15) are aligned on one common shafting and are driving one generator (5).

10. A power plant (1,2) according to one of the claims 1 to 9, **characterized in that** the first steam turbine arrangement (14) comprises a shafting with one intermediate pressure turbine (27) coupled to a first side of a generator (5, 45), and **in that** the second steam turbine arrangement (15) comprises an additiontional low-pressure steam turbine (44) coupled to a second side of the generator (5, 45) and a second low-pressure turbine (28) connectable to the additional low-pressure steam turbine (44) by an overrunning clutch (23).

11. A power plant (1, 2) according to one of the claims 1 to 10, **characterized in that** it comprises a CO2 capture system (12), for removing CO2 from the flue gas (4), flue gas ducting to the CO2 capture system (12) and a stack (16) downstream of the CO2 capture system (12).

12. A power plant (1, 2) according to one of the claims 1 to 10, **characterized in that** it comprises space required for a CO2 capture system (12) capable of removing CO2 form the power plants flue gas (4), and **in that** it is arranged to allow retrofitting of a CO2 capture system (12), for removing CO2 from the flue gas (4), and/or **in that** it comprises flue gas ducting and a stack (16) prepared for retrofitting a CO2 capture system (12).

13. A method for operating a power plant (1, 2) according to claim 11, **characterized in that** the first steam turbine arrangement (14) is operated to produce power during all steady state operating points of the steam cycle and that at least a part of the second steam turbine arrangement (15) is bypassed to the CO2 capture system (12) and/ or is operated to produce power and to release low-pressure steam to the CO2 capture system (12) during periods when the CO2 capture system (12) is in operation, and **in that** both steam turbine arrangements (14, 15) are operated using all available steam to produce power when the CO2 capture system (12) is not in operation.

14. A method according to claim 13, **characterized in that** the CO2 capture system (12) is switched off and the second low-pressure turbine (28) of the second steam turbine arrangement (15) is operated to produce peak power during periods of high electricity demand or during which CO2 capture is not required or cannot be operated.

15. A method according to claim 13 or 14, **characterized in that** the second low-pressure turbine (28) of the second steam turbine arrangement is charged with a minimum steam flow to keep the second steam turbine (28) warm for quick start up and or loading when CO2 capture system (12) is not operating.

16. A method for retrofitting a power plant (1, 2) according to claim 12, **characterized in that** the CO2 capture system (12) is built on the space provided for the CO2 capture system (12), and **in that** the CO2 capture system (12) is built while the power plant (1, 2) is operating, and **in that** operation of the power plant (1, 2) is only interrupted for connection of the CO2 capture system (12), and for subsequent recommissioning, where connecting the CO2 capture system (12) comprises connecting the low-pressure steam (11c), condensate (13) electric power supply, controls, and flue gas ducting and/ or modifying the flue gas ducting.
